# EUROPEAN PATENT APPLICATION

(11) **EP 3 418 657 A1**
(43) Date of publication of application: **26.12.2018**
(21) Application number: 18178781.3
(22) Date of filing: 20.06.2018
(51) Int. Cl.: F25D 17/04, F16K 17/194

(54) **Freezer compensation valve**

(30) Priority: 22.06.2017 IT 201700070001
(71) Applicant: Angelantoni Life Science S.R.L also know as ALS S.R.L., 06056 Massa Martana (PG) (IT)
(72) Inventor: GIAIMO, Roberto, I-06056 Massa Martana PG (IT); ASCANI, Maurizio, I-06056 Massa Martana PG (IT)
(74) Representative: Ercolani, Simone Pietro

(57) **Abstract**

Compensation valve (1) for freezer (100) of the type comprising at least one freezing compartment (101) and at least one door (102) openable /closable for the access to said freezing compartment, said compartment (101) further comprising at least one wall (103) and at least one hole (104) for the restoration of the atmospheric pressure inside said compartment, said hole being combined with said at least one wall or said at least one door, said compensation valve (1) comprising at least one box-shaped body (2) sealingly combined with said wall of said freezer or with said at least one door, the box-shaped body being provided with one opening (3) couplable to said hole for the fluidic communication between said compartment and the inner zone (4) of said box-shaped body (2), said box-shaped body being further provided with at least one first passage (7) for the fluidic communication between the outside and the inside of said compartment through said hole, and with a first cut-off valve (8) for said first passage movably constrained to said box-shaped body between a first position (PI), in which said first passage is open for the air inflow into said compartment through said hole, at least until the inside pressure of the compartment is lower than the outside pressure, and a second position (P2) in which said first passage is sealingly closed, to prevent the air inflow into said compartment through said hole, at least when the inside pressure of the compartment is equal to the outside pressure of the compartment, characterized in that said first cut-off valve (8) is movable with respect to said passage along a substantially vertical direction so that to be sealingly combined with said first passage, at least when said first cut-off valve (8) is in said second position (P2), and to be separated from said first passage (7), at least when said first cut-off valve (8) is in said first position (P1).

## Description

### FIELD OF THE INVENTION

The present invention refers to a freezer compensation valve.

### KNOWN PRIOR ART

According to the known art, a freezer compensation valve is intended to compensate the pressure difference between the inside and outside of the cells or compartments of a freezer. Generally, such pressure difference occurs during the transient openings and subsequent closings of freezer doors. In fact, it is known that a sudden rise in temperature occurs inside the compartment following the opening of the freezer door and that a depression, such as to make it difficult to reopen the same door, is generated following its subsequent closing.

In this regard, freezers always have a compensation hole intended just to favor a rapid restoration of pressure inside the compartment, equal to the one outside.

Unfortunately, the hole is also responsible for the increase in humidity in the freezer compartment and, therefore, for the consequent formation of ice at the hole.

In order to prevent this issue, a compensation valve is therefore installed to limit the inflow of air in the compartment, only for the period during which the inside pressure is lower than the outside pressure. Such compensation valve of known art usually comprises a body sealingly combinable with the freezer wall at the aforesaid compensation hole. Such valve body comprises a passage for the fluidic communication between the outside and the inside of the freezer compartment, through the hole, and a cut-off valve for such passage. Such cut-off valve is movably constrained to the box-shaped body between a first position, wherein the passage is open, so as to allow the inflow of air into the compartment, through the compensation hole, until the pressure inside of the compartment is lower than the pressure outside of the compartment, and a second position, wherein the passage is sealingly closed so as to prevent the inflow of air into the compartment, through the hole, when the pressure inside of the compartment is identical to the pressure outside of the compartment. In practice, once the inside pressure is identical to the outside pressure, the hole is completely closed by the valve cut-off. The return position of the valve cut-off, from its first position to its second position, is guaranteed by the presence of a spring appropriately calibrated to only operate once a certain depression inside the freezer compartment is reached.

However, this solution is not without drawbacks. In fact, in the long run and after a certain number of opening and closing cycles, the valve thus obtained seems to be less efficient, since the spring that controls the return thereof to its initial closed position loses its initial calibration. As a result, this clearly can lead to humidity issues inside the freezer compartment or even to great difficulties in reopening the freezer door. For the aforesaid reasons, such compensation valve must be periodically maintained and, whenever needed, one or more of its initial components must be replaced.

Moreover, the afore described valve of known art consists of numerous components, but particularly always requires the presence of a spring for its operations, therefore with consequent issues both when checking its calibration and when assembling it.

Moreover, this solution cannot be used whenever a sudden increase in pressure is detected inside the compartment. For example, this occurs in the event of a failure to the refrigeration system and when nitrogen, or carbon dioxide, must consequently be introduced into the freezer compartment to preserve its contents. In this regard, certain freezers are provided with such nitrogen, or carbon dioxide, safety injectors, which only operate whenever an issue is detected within the refrigeration system.

Therefore, in this situation, the pressure inside the freezer compartment rises and must be rebalanced as soon as possible. For this purpose, a second compensation hole is provided and combined with a second compensation valve operating in the opposite way compared to the first compensation valve installed, i.e. adapted to only allow air to escape from the inside of the freezer compartment in the event of a pressure increase inside the compartment.

The object of the present invention is to implement, compared to those of the known art, a more simple and compact compensation valve that does not require any type of maintenance.

Moreover, a further object of the present invention is to provide an easy to assemble compensation valve.

Finally, a further object of the present invention is to implement a compensation valve that can be installed on already operating freezers.

### SUMMARY OF THE INVENTION

These and other objects are achieved by a freezer compensation valve of the type comprising at least one freezing compartment and at least one door openable /closable for the access to said freezing compartment, said compartment further comprising at least one wall and at least one hole for the restoration of the atmospheric pressure inside said compartment, said hole being combined with said at least one wall or said at least one door, said compensation valve comprising at least one box-shaped body sealingly combined with said wall of said freezer or with said at least one door, the box-shaped body being provided with one opening couplable to said hole for the fluidic communication between said compartment and the inner zone of said box-shaped body, said box-shaped body being further provided with at least one first passage for the fluidic communication between the outside and the inside of said compartment through said hole, and with a first cut-off valve for said first passage movably constrained to said box-shaped body between a first position, in which said first passage is open for the air inflow into said compartment through said hole, at least until the inside pressure of the compartment is lower than the outside pressure, and a second position in which said first passage is sealingly closed, to prevent the air inflow into said compartment through said hole, at least when the inside pressure of the compartment is equal to the outside pressure of the compartment, characterized in that said first cut-off valve is movable with respect to said passage along a substantially vertical direction so that to be sealingly combined with said first passage, at least when said first cut-off valve is in said second position, and to be separated from said first passage, at least when said first cut-off valve is in said first position.

Such solution therefore allows to achieve the objects suggested. In fact, the first compensation cut-off valve when the valve is installed, or when the box-shaped body is sealingly combined with said wall of said freezer or with said at least one door, whose opening is coupled to said hole for the fluidic communication between said compartment and said inner zone of the box-shaped body, only slides in a vertical direction and does not therefore require the presence of a spring to return from its first position to its second position, since it simply uses gravity to do so. Moreover, the fact that it can only slide vertically also causes its center of gravity to always slide vertically. This considerably simplifies the calibration of the valve since its behavior will exclusively depend on the weight of the first valve cut-off, which must be designed so as to ensure that it can raise itself from its second position to its first position only in the presence of a certain depression, greater than a predetermined value, inside the freezer compartment. Therefore, in practice, the first cut-off valve will not move from its second position, i.e. from its closed position, to its first position or to its opened position, in case of small pressure oscillations inside the freezer compartment during its normal operations, but only when the depression reaches a certain value, i.e. only after the freezer door has been opened and, then, subsequently closed again.

Advantageously, said first cut-off valve comprises at least one first head and at least one first piston. The box-shaped body further comprises at least one first guide inside which said at least one first piston slides vertically so that said head is sealingly combined with said first passage, at least when said first cut-off valve is in said second position and is separated from said first passage, at least when said first cut-off valve is in said first position. Advantageously, said at least one head of said first cut-off valve cooperates, in said second position, with the inner surface of said box-shaped body, therefore being able to move from the bottom upwards to reach, starting from its second position, the first position before returning by gravity to its second position once there is no more depression inside the freezing compartment.

Moreover, said first passage is obtained on the lower wall of said box-shaped body, which lies on a horizontal plane at least when said box-shaped body is sealingly combined with said wall of said freezer, or with said at least one door. In particular, the freezer wall with which said box-shaped body is combined is one of the side walls, therefore lying on a vertical plane.

This guarantees the operations of the valve cut-off, thanks to the force of gravity alone, and prevents the cut-off valve from lowering further in case of pressure increases inside the compartment.

Still according to the invention, said box-shaped body is further provided with at least one second passage for the fluidic communication between the outside and the inside of said compartment through said hole, and with a second cut-off valve for said second passage movably constrained to said box-shaped body between a first position, in which said second passage is open for the air outflow from said compartment through said hole, at least until the inside pressure of the compartment is higher than the outside pressure, and a second position in which said second passage is sealingly closed, to prevent the air inflow into said compartment through said hole, at least when the inside pressure of the compartment is equal to the outside pressure of the compartment, said second cut-off valve being movable with respect to said passage along a substantially vertical direction so that to be sealingly combined with said second passage, at least when said second cut-off valve is in said second position, and to be separated from said second passage, at least when said second cut-off valve is in said first position. Also in this case, it must be noted that the vertical sliding of the second cut-off valve is achieved when the compensation valve is installed on the freezer, i.e. at least when the box-shaped body is sealingly combined with said wall of said freezer or with said at least one door, and whose opening is coupled to said hole for the fluidic communication between said compartment and the inner zone of said box-shaped body.

Thanks to this solution, the same compensation valve can be used both in case of increase or decrease in the pressure inside the freezer compartment, without making further holes in the walls of the freezer or in its door, and without using any return spring since only the force of gravity is used for both cut-off valve elements.

Therefore, in this way, only one compensation valve can be used to compensate for the pressure variations that occur inside the freezer compartment, both the negative and positive ones.

Still according to the present invention, said second cut-off valve comprises at least one second head and at least one second piston. Moreover, said box-shaped body comprises at least one second guide inside which said at least one second piston slides vertically so that said second head is sealingly combined with said second passage, at least when second cut-off valve is in said second position and is separated from said second passage, at least when said second cut-off valve is in said first position.

Therefore, also in this case, there is no need to use a spring to control the return of the cut-off valve from its first position to its second position, since this is simply governed by the law of gravity. Moreover, the fact that it can only slide vertically causes the center of gravity of the second cut-off valve to also always slide along a vertical axis. This considerably simplifies the calibration and dimensioning of the valve since, in this case, its behavior will exclusively depend on the weight of the second valve cut-off, which must be designed so as to allow it to raise itself from its second position to its first position only in the event that a certain increase in pressure, greater than a predetermined value, occurs inside the freezer compartment.

Therefore, in practice, the second cut-off valve will not move from its second position, i.e. the closed position, to its first position, i.e. opened position, in case of small pressure oscillations inside the freezer compartment during its normal operations, but only in case of high increase in pressure, i.e. only after a considerable amount of nitrogen, or carbon dioxide, has been introduced inside the compartment to preserve the contents of the freezer.

Moreover, said at least one head of said second cut-off valve cooperates, in said second position, with the outer surface of said box-shaped body. Still according to the invention, said second passage is obtained on the upper wall of said box-shaped body, which lies on a horizontal plane, at least when said box-shaped body is sealingly combined with said wall of said freezer or with said at least one door. Advantageously, said first passage and said second passage are obtained on walls opposite to one another of said box-shaped body.

Finally, said opening of said box-shaped body is obtained on a side wall of said box-shaped body orthogonal to said lower wall and said upper wall. Such side wall of said box-shaped body is sealingly combinable with the outer side of said wall of said compartment, or of said at least one door, at said hole.

Still according to the invention, a freezer of the type comprising at least one freezing compartment and at least one openable/closable door to access said freezer compartment is also protected, wherein the compartment further comprises at least one wall and at least one hole for the restoration of the atmospheric pressure inside the compartment after the closing of said door, wherein said hole is combined with said at least one wall or said at least one door. This freezer further comprises at least one compensation valve according to one or more of claims 1 to 11.

### BREIF DESCRIPTION OF THE FIGURES

These and other aspects of the present invention will become clearer by the following detailed description of a preferred embodiment provided herein by way of example only and without limitations, with reference to the accompanying figures, in which:
Figure 1 shows a sectional longitudinal view of a freezer combined with a compensation valve according to the invention;
figure 2A is an axonometric view of the compensation valve according to the invention;
figure 2B is a front view of the compensation valve according to the invention;
figure 2C is a sectional longitudinal view of the compensation valve according to the invention;
figure 2D is an axonometric exploded view of the compensation valve according to the invention;
figures 3A-3C each show a schematic sectional longitudinal view of the compensation valve, wherein the first cut-off valve and the second cut-off valve are in different positions.

### DETAILED DESCRIPTION OF A PREFERRED EMBODIMENT OF THE PRESENT INVENTION

With reference to the figures above, a compensation valve 1 according to the invention is shown.

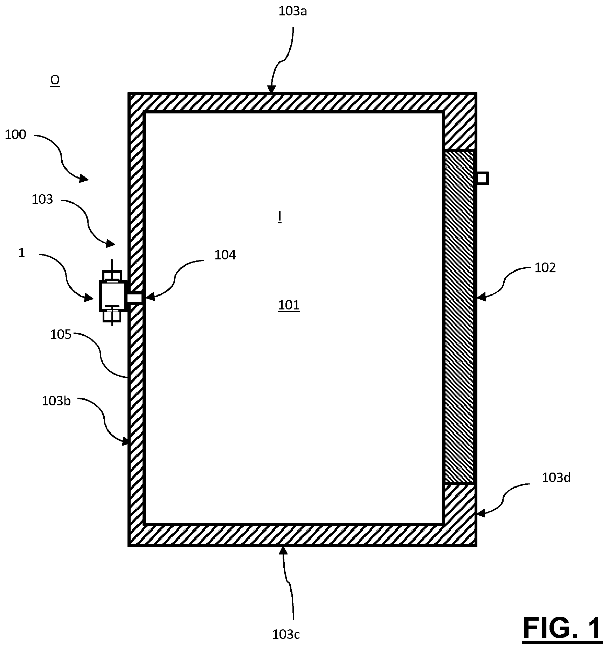

The compensation valve 1 object of the invention is used for a freezer 100 of the type comprising a freezing compartment 101 and a door 102 openable/closable to access the compartment 101. According to known art, the compartment 101 comprises six walls 103, i.e. the upper wall 103a, the back wall 103b, the lower wall 103c, the front wall 103d and two side walls not shown in figure 1, and a hole 104 for the restoration of the atmospheric pressure inside the compartment 101. As explained above, it is necessary for the opening and subsequent closing of the freezer, i.e. when the temperature in the freezer compartment 101 suddenly increases and when the pressure decreases inside the compartment 101 itself when closing the door 102. The hole 104 is obtained in the back wall 103b of the freezer compartment 102 and normally has dimension of about 30 mm.

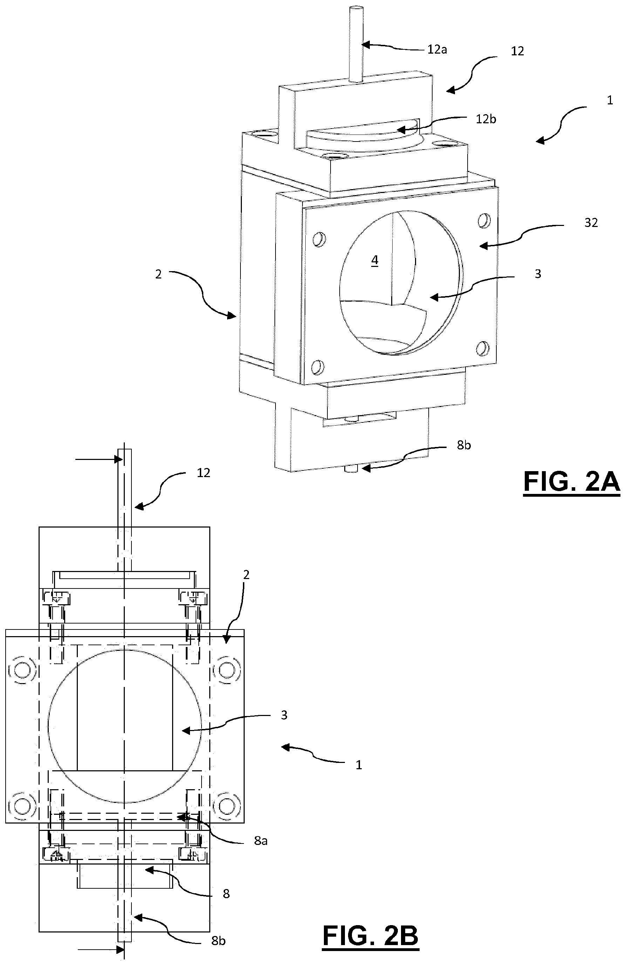

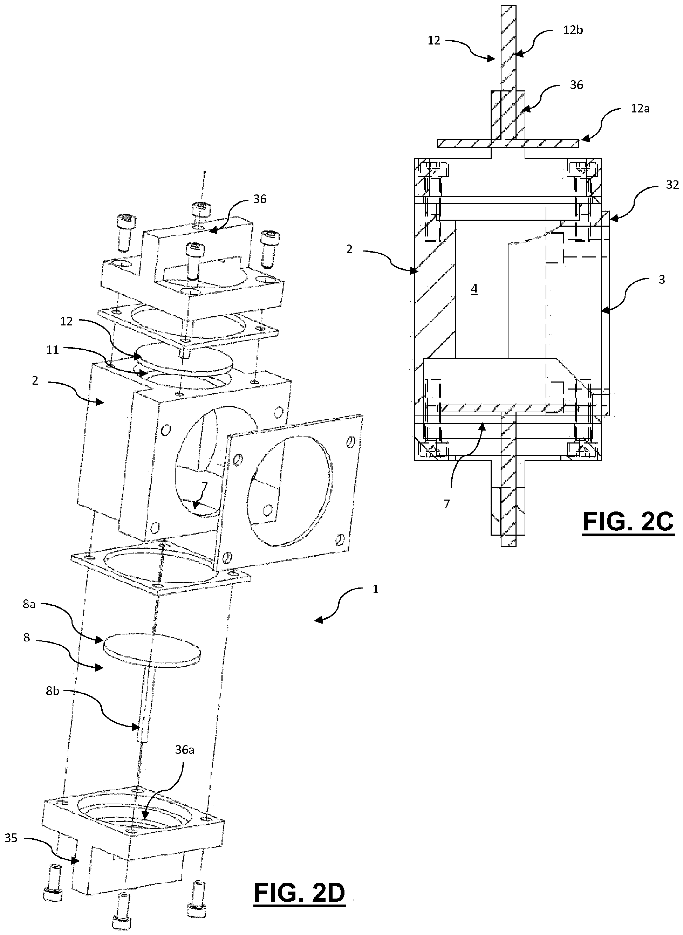

With reference to the figure 2A, the compensation valve 1 comprises a box-shaped body 2 provided with an opening 3 couplable with the hole 104 for the fluidic communication between the compartment 101 and the inner zone 4 of the box-shaped body 2. Therefore, in practice, the box-shaped body 2 can be sealingly combined with the back wall 103b of the freezer 100 so that the opening 3 surrounds the compensation hole 104. Such box-shaped body 2 is provided with a first passage 7 for fluidic communication between the outside O and the inside I of the compartment 101, through the hole 104, and with a first cut-off valve 8 for the first passage 7, movably constrained to the box-shaped body 2 at a first linear guide 35 between a first position P1, wherein the first passage 7 is open for the inflow of air inside the compartment 101 through the hole 104, at least until the pressure inside of the compartment 101 is lower than the outside pressure, and a second position P2 wherein the first passage 7 is sealingly closed, so as to prevent the inflow of air inside the compartment 101 through the hole 104, at least when the pressure inside of the compartment 101 is equal to the pressure outside of the compartment 101.

According to the invention, the first cut-off valve 8 is movable with respect to the first passage 7 along a substantially vertical direction so as to be sealingly combined with the first passage 7, at least when the first cut-off valve 8 is in its second position P2, and separated from the first passage 7 at least when the first cut-off valve 8 is in said first position P1. The vertical direction of the first cut-off valve 8 is obtained when the box-shaped body 2 is combined with one of the walls 103 of the freezer 100 lying on a vertical plane, by way of example, with the back wall 103b or with the door 102 of freezer 100 itself. Moreover, the vertical axis along which such first cut-off valve 8 slides is also the central axis of the first passage 7.

As shown in the figures annexed, the first cut-off valve 8 comprises a first head 8a and a first piston 8b that slides vertically inside the first guide 35 so that the head 8a is sealingly combined with the first passage 7, at least when the first cut-off valve 8 is in the second position P2, and separated from the first passage 7, at least when the first cut-off valve 8 is in the first position P1. In particular, the head 8a of the first cut-off valve 8 cooperates, in its second position P2, with the inner surface 2a of the box-shaped body 2. As shown in the figures annexed, the first cut-off valve 8 moves vertically from its second position P2 to its first position P1 following a strong depression that occurs between the freezer compartment 101, following to the opening and subsequent closing of the door 102, and it moves from its first position P1 to its second position P2 simply due to gravity, when such depression is no longer present. Therefore, thanks to this solution, the valve 1 does not require any spring to favor such return of the cut-off valve 8 to its resting position, i.e. closed position P2.

Moreover, the first head 8a of the first cut-off valve 8 cooperates, in its second position P2, with the inner surface 2a of the box-shaped body.

In particular, the first passage 7 is obtained on the lower wall 30 of the box-shaped body 2. The surface of the lower wall 30 facing the inside of the box-shaped body 2 is the aforesaid inner surface 2a on which the head 8a of the first cut-off valve 8 is sealingly maintained, when the latter is in its second position P2. This lower wall 30 lies on a horizontal plane, at least when the box-shaped body 2 is sealingly combined with the wall 103b of the freezer 100.

Advantageously, according to the invention, the box-shaped body 2 is further provided with a second passage 11 for the fluidic communication between the outside O and the inside I of the compartment 101, through the hole 104, and with a second cut-off valve 12 for the second passage 11, movably constrained to the box-shaped body 2 at a second linear guide 36, between a first position S1, wherein the second passage 11 is opened for the outflow of air from the compartment through the hole 104, at least when the pressure inside of the compartment 101 is greater than the outside pressure outside, and a second position S2 wherein the second passage 11 is sealingly closed, so as to prevent the inflow of air into the compartment 101 through the hole 104, when the pressure inside of the compartment 101 is equal to the pressure outside of the compartment 101. According a particular embodiment herein described, the second cut-off valve 12 is movable with respect to the second passage 11 along a substantially vertical direction, so that it can be sealingly combined with the second passage 11, at least when the second cut-off valve 12 is in its second position S2, and separated from the second passage 11, at least when the second cut-off valve 12 is in its first position S1.

The vertical direction of the second cut-off valve 12 is obtained when the box-shaped body 2 is combined with one of the walls 103 of the freezer 100, by way of example, with the back of the wall 103b, or with the door 102 of the freezer 100 itself.

Moreover, the vertical axis along which such second cut-off valve 12 slides is also the central axis of the second passage 11.

Therefore, in practice, a single valve body 2 has two passages 7 and 11 and two cut-off valve elements 8 and 12, the latter being able to work in the various operative steps of the freezer 100, during which there are pressure variations inside the compartment 102, i.e. when transient openings and subsequent closings of the door occur or when increases in pressure inside the compartment 102 occur, due to any malfunction of the refrigeration system. Both of the cut-off valve elements 8 and 12 are also able to slide vertically only and to use the force of gravity to return to their initial position P2 or S2.

According to the embodiment described herein, the box-shaped body 2 is sealingly combined with the outer side 105 of the back wall 103b of the freezer compartment 101, at the hole 104. The box-shaped body 2 further comprises a second guide 36 for the sliding of the second cut-off valve 12.

Moreover, according to the invention, the second cut-off valve 12 comprises a second head 12a and a second piston 12b, which vertically slides within the second guide 36 so that the second head 12a is sealingly combined with the second passage 11, at least when the second cut-off valve 12 is in its second position S2, and separated from the second passage 11, at least when the second cut-off valve 12 is in its first position S1. Advantageously, the head 12a of the second cut-off valve 12 cooperates, in its second position S2, with the outer surface 2b of the box-shaped body 2. In this embodiment, the head 12a and the piston 12b of the second cut-off valve 12 are made in one piece.

As shown in the annexed figures, the first passage 7 and the second passage 11 are respectively obtained on the walls 30 and 31, opposite to one another, of the box-shaped body 2. Preferably, the first passage 7 and the second passage 11 are respectively obtained on the lower wall 30 and the upper wall 31 of the box-shaped body 2 and the hole 104 is instead combined with the opening 3 of the box-shaped body 2 lying on a side wall 32 of the box-shaped body 2 orthogonal with respect to the walls 30 and 31 on which the first passage 7 and the second passage 11 are respectively obtained. Thanks to this, the wall 31 on which the second passage 11 is obtained is also arranged on a horizontal plane when the valve is combined with the wall 103 of the freezer 100.

The surface of the upper wall 31 facing the outside of the box-shaped body 2 is the aforesaid outer surface 2b on which the head 12a of the second cut-off valve 12 is sealingly maintained when the latter is in its second position S2.

Advantageously, the vertical sliding axis of the two cut-off valve elements 8 and 12 and the central axis of the two passages 7 and 11 are the same axis.

It should be emphasized that the shape of the valve body 1, as mentioned of the box-shaped type, considerably simplifies the implementation of the valve 1 and also its precise arrangement on the wall 103b of the freezer 100, so as to ensure its perfect operation. In fact, thanks to the fact that the lower wall 30 and the upper wall 31 of the body 2 are exactly orthogonal to the wall 32 that is combined to the vertical wall 103b of the freezer 100, it is possible to achieve that the first cut-off valve 8 and the second cut-off valve 12 are in a perfect position, i.e. vertical, once the valve 1 is mounted, thus they are adapted to work without the need of calibration.

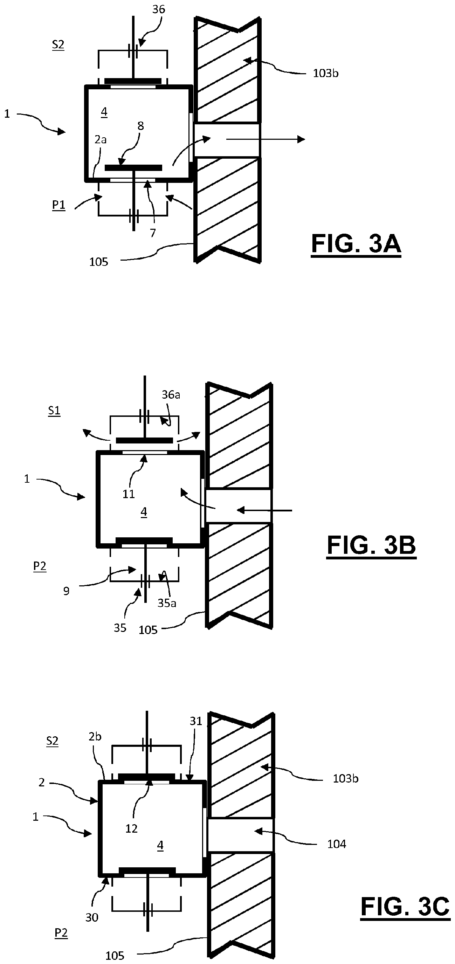

According to the invention, with reference to figures 3A and 3C, the operation of the valve 1 is illustrated hereinbelow.

Figure 3A shows any depression that occurred in the freezer compartment 101 following the opening and closing of the door 102 of the freezer 100. In this situation, the first cut-off valve 8 is forced to move from its initial second position P2 to its first position P1, therefore opening the first passage 7 and allowing the inflow of air inside of the compartment 101 to rebalance the pressure inside the freezer compartment 101 itself. The second cut-off valve 12 remains in its second position S2 instead, since the force to which it is subjected tends to increase the sealing with the second opening 11.

The return of the first cut-off valve 8 from its first position P1 to its second position P2 occurs by gravity, when the pressure inside of the compartment 101 is rebalanced, i.e. it is equal to the outside pressure.

Figure 3B shows the case when nitrogen, or carbon dioxide, is injected inside the freezer compartment 101 following any malfunction of the refrigeration system, with a consequent increase in pressure inside the freezer compartment 101. In this situation, the second cut-off valve 12 is forced to move from its second position S2 to its first position S1, therefore opening the second passage 11 and allowing the outflow of air from the compartment 101 in order to rebalance the pressure inside of the freezer compartment 101. The first cut-off valve 8 remains in its second position P2 instead, since the force to which it is subjected tends to increase the sealing with the first opening 7.

The return of the second cut-off valve 12 from its first position S1 to its second position S2 occurs by gravity, when the pressure inside of the compartment 101 is rebalanced.

Finally, figure 3C shows when both of the cut-off valve elements 8 and 12 are in their initial second positions P2 and S2, i.e. when the two passages 7 and 11 are closed whenever the pressure inside of the compartment 101 is of the same value as the outside pressure.

## Claims

1. Compensation valve (1) for freezer (100) of the type comprising at least one freezing compartment (101) and at least one door (102) openable /closable for the access to said freezing compartment, said compartment (101) further comprising at least one wall (103) and at least one hole (104) for the restoration of the atmospheric pressure inside said compartment, said hole being combined with said at least one wall or said at least one door, said compensation valve (1) comprising at least one box-shaped body (2) sealingly combinable with said wall of said freezer or with said at least one door, the box-shaped body being provided with one opening (3) couplable to said hole for the fluidic communication between said compartment and the inner zone (4) of said box-shaped body (2), said box-shaped body being further provided with at least one first passage (7) for the fluidic communication between the outside and the inside of said compartment through said hole, and with a first cut-off valve (8) for said first passage movably constrained to said box-shaped body between a first position (P1), in which said first passage is open for the air inflow into said compartment through said hole, at least until the inside pressure of the compartment is lower than the outside pressure, and a second position (P2) in which said first passage is sealingly closed, to prevent the air inflow into said compartment through said hole, at least when the inside pressure of the compartment is equal to the outside pressure of the compartment, **characterized in that** said first cut-off valve (8) is movable with respect to said passage along a substantially vertical direction so that to be sealingly combined with said first passage, at least when said first cut-off valve (8) is in said second position (P2), and to be separated from said first passage (7), at least when said first cut-off valve (8) is in said first position (P1).

2. Valve according to claim 1, **characterized in that** said at least one first cut-off valve comprises at least one first head (8a) and at least one first piston (8b), said box-shaped body (2) comprising at least one first guide (35) inside which said at least one first piston (8b) slides vertically so that said head is sealingly combined with said first passage, at least when said first cut-off valve (8) is in said second position (P2), and is separated from said first passage (7), at least when said first cut-off valve (8) is in said first position (P1).

3. Valve according to claim 2, **characterized in that** said at least one first head (8a) of said first cut-off valve cooperates, in said second position, with the inner surface (2a) of said box-shaped body.

4. Valve (1) according to one or more of the preceding claims, **characterized in that** said first passage (7) is obtained on the lower wall (30) of said box-shaped body (2), said lower wall (30) lying on a horizontal plane at least when said box-shaped body (2) is sealingly combined with said wall of said freezer or said at least one door.

5. Valve according to one or more of preceding claims 1 to 4, **characterized in that** said box-shaped body (2) is further provided with at least one second passage (11) for the fluidic communication between the outside and the inside of said compartment through said hole, and with a second cut-off valve (12) for said second passage movably constrained to said box-shaped body (2) between a first position (S1), in which said second passage is open for the air outflow from said compartment through said hole, at least until the inside pressure of the compartment is higher than the outside pressure, and a second position (S2) in which said second passage is sealingly closed, to prevent the air inflow into said compartment through said hole, at least when the inside pressure of the compartment is equal to the outside pressure of the compartment, said second cut-off valve (12) being movable with respect to said passage (11) along a substantially vertical direction so that to be sealingly combined with said second passage, at least when said second cut-off valve (12) is in said second position (S2), and to be separated from said second passage (11), at least when said second cut-off valve (12) is in said first position (S1).

6. Valve according to claim 5, **characterized in that** said at least one second cut-off valve (12) comprises at least one second head (12a) and at least one second piston (12b), said box-shaped body (2) comprising at least one second guide (36) inside which said at least one second piston (12b) slides vertically so that said second head is sealingly combined with said second passage (11), at least when said second cut-off valve (12) is in said second position (S2), and is separated from said second passage (11), at least when said second cut-off valve is in said first position (S1).

7. Valve according to claim 6, **characterized in that** said at least one head (12a) of said second cut-off valve cooperates, in said second position (S2), with the outer surface (2b) of said box-shaped body.

8. Valve (1) according to one or more of claims 5 to 7, **characterized in that** said second passage (11) is obtained on the upper wall (31) of said box-shaped body (2), said upper wall lying on a horizontal plane at least when said box-shaped body is sealingly combined with said wall of said freezer or said at least one door.

9. Valve (1) according to one or more of claims 4 to 8, **characterized in that** said first passage (7) and said second passage (11) are obtained on walls (30, 31) of said box-shaped body which are opposite to one another.

10. Valve (1) according to one or more of the preceding claims, **characterized in that** said opening (3) of said box-shaped body is obtained on a side wall (32) of said box-shaped body (2) orthogonal to said lower wall (30) and said upper wall (31).

11. Valve according to one or more of the preceding claims, **characterized in that** said side wall (32) of said box-shaped body is sealingly combinable with the outer side of said wall (103) of said compartment (101) or with said at least one door (102), at said hole (104).

12. Freezer (100) of the type comprising at least one freezing compartment (101) and at least one door (102) openable /closable for the access to said freezing compartment, said compartment (101) further comprising at least one wall (103) provided with a hole (104) for the restoration of the atmospheric pressure inside said compartment when said door has been closed, said hole being combined with said at least one wall or said at least one door, **characterized by** comprising at least one compensation valve (1) according to one or more of claims 1 to 11.
